# EUROPÄISCHE PATENTSCHRIFT

(11) **EP 0 550 923 B1**
(45) Veröffentlichungstag und Bekanntmachung des Hinweises auf die Patenterteilung: **15.02.1995**
(21) Anmeldenummer: 92203737.9
(22) Anmeldetag: 03.12.1992
(51) Int. Cl.: B01J 8/38, B01J 8/28, F23C 11/02, F22B 31/00

(54) **Verfahren und Vorrichtung zum Kühlen der heissen Feststoffe eines Wirbelschichtreaktors**
Method and device for cooling of hot solids from a fluidized bed reactor
Procédé et appareil pour le refroidissement de matières solides chaudes d'un réacteur à lit fluidisé

(30) Priorität: 08.01.1992 DE 4200244
(43) Veröffentlichungstag der Anmeldung: 14.07.1993
(73) Patentinhaber: METALLGESELLSCHAFT Aktiengesellschaft, 60015 Frankfurt (DE)
(72) Erfinder: Ströder, Michael, Dr., W-6392 Neu-Anspach (DE); Albrecht, Johannes, Dr., W-6362 Wöllstadt 1 (DE); Hirsch, Martin, W-6382 Friedrichsdorf (DE); Reimert, Rainer, Dr., W-6270 Idstein (DE); Lewandowski, Wladyslaw, W-6231 Schwalbach (DE); Kral, Rudolf, W-8521 Effeltrich (DE)

(56) Entgegenhaltungen:
- EP-A- 0 407 730
- WO-A-90/05020
- DE-A- 3 741 935
- US-A- 4 776 288
- ALSTHOM REVIEW Nr. 7, 1987, PARIS FR Seiten 31 - 42 J.-P. TESSIER
- BWK BRENNSTOFF WARME KRAFT. Bd. 40, Nr. 3, M rz 1988, DUSSELDORF DE Seiten 57 - 67 V.WEISS ET AL. 'MATHEMATISCHE MODELLIERUNG ZIRKULIERENDER WIRBELSCHICHTEN F]R DIE KOHLVERBRENNUNG'

## Beschreibung

Die Erfindung betrifft ein Verfahren zum Kühlen heißer, aus einem Wirbelschichtreaktor kommender Feststoffe, die vom Reaktor durch heißes Gas zu einem Abscheider gefördert, im Abscheider vom Gas getrennt und in eine Kühlzone geleitet werden, die mindestens ein Wirbelbett mit einer Kühleinrichtung aufweist, wobei man die Feststoffe von der Kühlzone durch eine Abzugsleitung mindestens zum Teil zurück in den Wirbelschichtreaktor leitet, sowie eine Kühlvorrichtung zum Durchführen dieses Verfahrens.

Verfahren und Vorrichtungen dieser Art sind aus DE-A-37 41 935, EP-A-0 407 730 und GB-A-2 148 734 bekannt. Der Erfindung liegt die Aufgabe zugrunde, die bekannten Verfahren und Vorrichtungen zu verbessern, apparativ einfach zu arbeiten, für eine gute Regelbarkeit und intensive Kühlung des Feststoffstroms zu sorgen und dabei eine Anordnung zu finden, die sich auch für den Betrieb bei erhöhtem Druck eignet.

Die Aufgabe wird beim eingangs genannten Verfahren dadurch gelöst, daß die Feststoffe vom Abscheider zu einem ersten Wirbelbett geführt werden, daß die Feststoffe vom ersten Wirbelbett über eine Regeleinrichtung gesteuert wahlweise zu einem darunter liegenden zweiten Wirbelbett oder zur Abzugsleitung geführt werden, daß die Feststoffe im zweiten Wirbelbett abwärts geführt werden und am unteren Ende des zweiten Wirbelbettes durch einen Übergangsbereich in das untere Ende eines dritten Wirbelbettes übergehen, daß die Feststoffe im dritten Wirbelbett aufwärts geführt und im oberen Bereich des dritten Wirbelbettes mindestens teilweise durch die Abzugsleitung abgeführt werden, daß das zweite und/oder das dritte Wirbelbett eine Kühleinrichtung aufweist und daß Wirbelgase aus einem Sammelraum unterhalb des ersten Wirbelbettes und oberhalb des zweiten und dritten Wirbelbettes abgezogen werden. Das Verfahren kann bei Drücken im Bereich von 1 bis 50 bar betrieben werden.

Die Regeleinrichtung kann auf verschiedene Weise z.B. pneumatisch oder mechanisch ausgebildet sein. Besonders vorteilhaft ist es, die Regeleinrichtung so auszubilden, daß mindestens ein regelbarer Gasstrom auf den Übergangsbereich am unteren Ende zwischen dem zweiten und dritten Wirbelbett einwirkt. Hierdurch wird ein fluiddynamisches Regelventil ohne bewegte Teile geschaffen, das für den gewünschten Feststoffdurchsatz durch das zweite Wirbelbett sorgt. Wird der Weitertransport der Feststoffe beschleunigt, so kann das zweite Wirbelbett alle vom ersten Wirbelbett kommenden Feststoffe aufnehmen und sie zum dritten Wirbelbett leiten. Wenn man den Weitertransport vom zweiten zum dritten Wirbelbett aber drosselt, stauen sich die Feststoffe im zweiten Wirbelbett, so daß weitere, vom ersten Wirbelbett kommende Feststoffe über das zweite und dritte Wirbelbett hinweg direkt zur Abzugsleitung laufen und den Gassammelraum ungekühlt verlassen. Durch Regeln der Menge an ungekühlten und gekühlten Feststoffen läßt sich die gewünschte Temperatur der in den Wirbelschichtreaktor zurückgeführten Feststoffe einstellen.

Für das Verfahren ist es weiterhin wichtig, daß sich die Feststoffe im zweiten Wirbelbett kontinuierlich nach unten bewegen und daß ihre Bewegung im dritten Wirbelbett kontinuierlich nach oben gerichtet ist. Dadurch kann das Kühlfluid, das die Wärme durch indirekten Wärmeaustausch abführt, in jedem Wirbelbett im Gleichstrom oder im Gegenstrom zu den Feststoffen strömen.

Die erfindungsgemäße Kühlvorrichtung ist dadurch gekennzeichnet, daß ein erstes Wirbelbett mit dem Abscheider verbunden und unterhalb von diesem angeordnet ist, daß das erste Wirbelbett einen Feststoff-Auslauf aufweist, der zu einem zweiten Wirbelbett gerichtet ist, welches unterhalb vom ersten Wirbelbett angeordnet ist, daß sich neben dem zweiten Wirbelbett ein drittes Wirbelbett befindet, wobei das zweite und/oder das dritte Wirbelbett mit einer Kühleinrichtung versehen ist, daß das zweite Wirbelbett mit dem dritten Wirbelbett über einen im unteren Bereich angeordneten Feststoff-Durchlaß verbunden ist, daß unter dem ersten Wirbelbett und über dem zweiten und dritten Wirbelbett ein Gassammelraum mit der Abzugsleitung für Feststoffe und einer Gasabzugsleitung angeordnet ist und daß eine Regeleinrichtung vom ersten Wirbelbett kommende Feststoffe wahlweise zum zweiten Wirbelbett oder zur Abzugsleitung führt.

Die Kühlvorrichtung kann vorteilhafterweise schmal und mit kleiner Grundfläche gebaut werden. Sie eignet sich deshalb nicht nur für den Betrieb bei Atmosphärendruck, sondern auch bei höherem Druck bis zu etwa 50 bar, da sie sich gut in ein Druckgehäuse einbauen läßt. Der Gassammelraum hat eine Abzugsleitung sowohl für Feststoffe als auch für Gas, dabei kann es zweckmäßig sein, für die Feststoffe und das Gas eine gemeinsame Abzugsleitung vorzusehen.

Ausgestaltungsmöglichkeiten der Erfindung werden mit Hilfe der Zeichnung erläutert. Es zeigt:
- Fig. 1: die zwischen einem Abscheider und einem Wirbelschichtreaktor angeordnete Kühlvorrichtung in schematischer Darstellung und
- Fig. 2: den Abscheider und die Kühlvorrichtung im Längsschnitt.

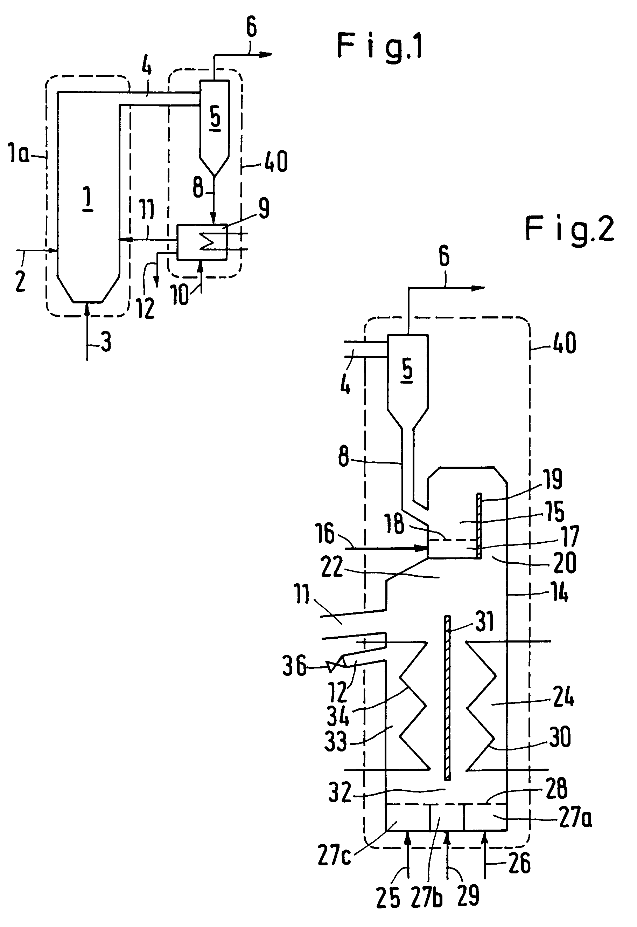

Der Wirbelschichtreaktor (1) der Fig. 1 dient der thermischen Behandlung körniger Feststoffe, die in der Leitung (2) herangeführt werden. Fluidisierungsgas, z.B. Luft, kommt aus der Leitung (3). Bei der thermischen Behandlung kann es sich z.B. um die Verbrennung oder Vergasung von Kohle, Braunkohle oder Abfallstoffen handeln, auch sind Reaktoren dieser Art z.B. zum Rösten sulfidischer Erze geeignet. Die Behandlung findet in der zirkulierenden Wirbelschicht statt, wobei Gase und Feststoffe zu einem Kanal (4) transportiert werden, von dem aus sie zu einem Abscheider (5), z.B. einem Zyklon, gelangen. Von Feststoffen weitgehend befreite Gase ziehen in der Leitung (6) ab und die abgeschiedenen, heißen Feststoffe, die Temperaturen im Bereich von etwa 400 bis 1200°C aufweisen, gelangen durch die Falleitung (8) zu einer Kühlvorrichtung (9). Die Feststoffe bilden in der Falleitung eine Schüttung und dadurch eine Gassperre.

Der in Fig. 1 nur vereinfacht dargestellten Kühlvorrichtung führt man durch die Leitung (10) Wirbelgas zu und zieht mehr oder weniger gekühlte Feststoffe in der Abzugsleitung (11) ab, die man zurück in den Wirbelschichtreaktor (1) leitet. Einen Überschuß an Feststoffen entfernt man durch die Leitung (12). Beim Arbeiten unter höherem Druck ist der Reaktor (1) von einem gestrichelt angedeuteten Druckgehäuse (1a) umgeben und der Abscheider (5) und die Kühlvorrichtung (9) befinden sich in einem eigenen, druckfesten Gehäuse (40), vgl. auch Fig. 2.

In Fig. 2 wurde zur Vereinfachung der Wirbelschichtreaktor (1) mit den Leitungen (2) und (3) weggelassen. In Fig. 2 zu sehen sind der Kanal (4), der ein Gas-Feststoff-Gemisch zum Abscheider (5) führt, die Gasabzugsleitung (6) und die Falleitung (8), durch welche die heißen Feststoffe zu einem ersten Wirbelbett (15) gelangen. Hierbei wird dafür gesorgt, daß in der Falleitung (8) eine geschlossene, sich abwärts bewegende Feststoffschüttung besteht, die als Gassperre dient. Durch die Leitung (16), die Verteilkammer (17) und den Düsenrost (18) wird dem ersten Wirbelbett (15) Fluidisierungsgas, z.B. Luft, in regelbarer Menge zugeführt. Feststoff und Wirbelgas treten über die Wand (19) in den Auslauf (20) und gelangen zunächst in eine Gassammelkammer (22). Die Gase ziehen durch die Leitung (11) ab und werden zum Wirbelschichtreaktor (1) geführt, vgl. Fig. 1.

Die vom Auslauf (20) nach unten fallenden Feststoffe gelangen in ein zweites Wirbelbett (24), durch welches Wirbelgase aufwärts strömen. Die Wirbelgase kommen in regelbarer Menge aus einer Leitung (26), einer Verteilkammer (27a) und einem Düsenrost (28). Im zweiten Wirbelbett (24) befindet sich eine Kühleinrichtung (30), durch die man ein Kühlfluid, z.B. Wasser oder Wasserdampf, hindurchleitet. Im zweiten Wirbelbett (24) bewegen sich die heißen Feststoffe unter allmählicher Kühlung nach unten zu einem zwischen der Trennwand (31) und dem Düsenrost (28) befindlichen Feststoff-Durchlaß (32). Vom Durchlaß (32) werden die Feststoffe dann aufwärts durch ein drittes Wirbelbett (33) geführt, das ebenfalls mit einer Kühleinrichtung (34) ausgerüstet ist. Die drei Wirbelbetten (15), (24) und (33) sowie die Gassammelkammer (22) werden von einem weitgehend geschlossenen Gehäuse (14) eingefaßt, das sich im Druckgehäuse (40) befindet.

Fluidisierungsgas für das dritte Wirbelbett (33) kommt aus der Leitung (25) und der Verteilkammer (27c). Die Menge dieses Fluidisierungsgases ist ebenfalls in nicht dargestellter, an sich bekannter Weise unabhängig regelbar. Zwischen den Verteilkammern (27a) und (27c) liegt in der in Fig. 2 dargestellten Ausführung eine weitere Verteilkammer (27b) mit eigener Fluidisierungsgas-Zufuhr durch die Leitung (29), die auch unabhängig regelbar ist. Das Gas aus der Verteilkammer (27b) sorgt entscheidend für den Weitertransport der Feststoffe vom zweiten Wirbelbett (24) durch den Durchlaß (32) zum dritten Wirbelbett (33).

Die im dritten Wirbelbett (33) aufwärts bewegten und dabei gekühlten Feststoffe gelangen schließlich zur Ableitung (11) und werden mit den aus dem Sammelraum (22) kommenden Gasen zurück in den Wirbelschichtreaktor (1) geführt. Es ist zweckmäßig, im oberen Bereich des Wirbelbettes (33) eine zweite Ableitung (12) vorzusehen, um über ein Dosierorgan (36) gekühlte Feststoffe aus dem Feststoff-Umlauf zu entfernen und einer anderweitigen Verwendung oder z.B. einer Deponie zuzuführen. Diese Feststoffe verlassen die Kühleinrichtung erst am Ende der Kühlstrecke und haben so den größten Teil ihrer fühlbaren Wärme an das Kühlfluid der Kühleinrichtung (34) abgegeben.

Durch die Regelbarkeit der durch die Leitung (29) herangeführten Gasmenge ist ein fluiddynamisches Ventil geschaffen, das folgendermaßen arbeitet: Bei verringerter Gaszufuhr stauen sich die Feststoffe im zweiten Wirbelbett (24) und fließen schließlich vom Auslauf (20) kommend über die Trennwand (31) und das dritte Wirbelbett (33) ganz oder weitgehend ungekühlt in die Abzugsleitung (11). Durch mehr oder weniger Feststoffstau im zweiten Wirbelbett (24) läßt sich so ein mehr oder weniger großer Teil der Feststoffe ungekühlt über die Wirbelbetten (24) und (33) hinwegleiten. Dies ändert die Mischtemperatur der Feststoffe in der Abzugsleitung (11), da hier die ungekühlten Feststoffe und die aus dem Wirbelbett (33) kommenden, gekühlten Feststoffe zusammentreffen. Somit läßt sich über das Regeln der Menge des in der Leitung (29) herangeführten Gases die Temperatur der Feststoffe in der Abzugsleitung (11) regeln.

In EP-A-0 407 730 wird ein Wirbelschichtreaktor und der zugehörige Wirbelschichtkühler einer zirkulierenden Wirbelschicht beschrieben, wobei der Reaktor und der Kühler in getrennten Druckgehäusen untergebracht sind. Solche Druckgehäuse sind auch bei der erfindungsgemäßen Anlage ohne weiteres möglich. Besonders vorteilhaft ist hier die schmale Bauweise und die Anordnung von Abscheider (5), erstem Wirbelbett (15) sowie zweitem Wirbelbett (24) und drittem Wirbelbett (33), die mehr in die Höhe gerichtet ist und wenig Grundfläche notwendig macht. Diese Anordnung läßt sich sehr einfach in ein Druckgehäuse (40) einschließen, was Fig. 2 verdeutlicht. Auch bei gewissen Abweichungen der Anordnung der drei Wirbelbetten (15), (24) und (33) ist dieser Vorteil noch gegeben. Dabei kann auch das erste Wirbelbett (15) mit einer in der Zeichnung nicht dargestellten Kühleinrichtung versehen sein.

## Patentansprüche

1. Verfahren zum Kühlen heißer, aus einem Wirbelschichtreaktor kommender Feststoffe, die vom Reaktor durch heißes Gas zu einem Abscheider gefördert, im Abscheider vom Gas getrennt und in eine Kühlzone geleitet werden, die mindestens ein Wirbelbett mit einer Kühleinrichtung aufweist, wobei man die Feststoffe von der Kühlzone durch eine Abzugsleitung mindestens zum Teil zurück in den Wirbelschichtreaktor leitet, dadurch gekennzeichnet, daß die Feststoffe vom Abscheider zu einem ersten Wirbelbett geführt werden, daß die Feststoffe vom ersten Wirbelbett über eine Regeleinrichtung gesteuert wahlweise zu einem darunter liegenden zweiten Wirbelbett oder zur Abzugsleitung geführt werden, daß die Feststoffe im zweiten Wirbelbett abwärts geführt werden und am unteren Ende des zweiten Wirbelbettes durch einen Übergangsbereich in das untere Ende eines dritten Wirbelbettes übergehen, daß die Feststoffe im dritten Wirbelbett aufwärts geführt und im oberen Bereich des dritten Wirbelbettes mindestens teilweise durch die Abzugsleitung abgeführt werden, daß das zweite und/oder das dritte Wirbelbett eine Kühleinrichtung aufweist und daß Wirbelgase aus einem Sammelraum unterhalb des ersten Wirbelbettes und oberhalb des zweiten und dritten Wirbelbettes abgezogen werden.

2. Verfahren nach Anspruch 1, dadurch gekennzeichnet, daß die Regeleinrichtung durch mindestens einen regelbaren Gasstrom auf den Übergangsbereich zwischen dem zweiten und dritten Wirbelbett einwirkt.

3. Verfahren nach Anspruch 1 oder 2, dadurch gekennzeichnet, daß die Zufuhr von Wirbelgas zum ersten Wirbelbett unabhängig von den Wirbelgasen des zweiten und dritten Wirbelbettes geregelt wird.

4. Verfahren nach einem der Ansprüche 1 bis 3, dadurch gekennzeichnet, daß die Kühlvorrichtung bei einem Druck von 1 bis 50 bar betrieben wird.

5. Kühlvorrichtung zum Kühlen heißer Feststoffe, die aus einem Wirbelschichtreaktor kommen, von einem Abscheider zur Kühlvorrichtung und von der Kühlvorrichtung durch eine Abzugsleitung mindestens teilweise zurück in den Wirbelschichtreaktor geleitet werden, wobei die Kühlvorrichtung mindestens ein Wirbelbett mit einer Kühleinrichtung aufweist, dadurch gekennzeichnet, daß ein erstes Wirbelbett mit dem Abscheider verbunden und unterhalb von diesem angeordnet ist, daß das erste Wirbelbett einen Feststoff-Auslauf aufweist, der zu einem zweiten Wirbelbett gerichtet ist, welches unterhalb vom ersten Wirbelbett angeordnet ist, daß sich neben dem zweiten Wirbelbett ein drittes Wirbelbett befindet, wobei das zweite und/oder das dritte Wirbelbett mit einer Kühleinrichtung versehen ist, daß das zweite Wirbelbett mit dem dritten Wirbelbett über einen im unteren Bereich angeordneten Feststoff-Durchlaß verbunden ist, daß unter dem ersten Wirbelbett und über dem zweiten und dritten Wirbelbett ein Gassammelraum mit der Abzugsleitung für Feststoffe und einer Gasabzugsleitung angeordnet ist und daß eine Regeleinrichtung vom ersten Wirbelbett kommende Feststoffe wahlweise zum zweiten Wirbelbett oder zur Abzugsleitung führt.

6. Kühlvorrichtung nach Anspruch 5, dadurch gekennzeichnet, daß die Regeleinrichtung als in den Feststoff-Durchlaß im unteren Bereich des zweiten und dritten Wirbelbettes gerichtete regelbare Gaszufuhr ausgebildet ist.

7. Kühlvorrichtung nach Anspruch 5 oder 6, dadurch gekennzeichnet, daß die Abzugsleitung für Feststoffe und die Gasabzugsleitung als gemeinsame Abzugsleitung ausgebildet sind.

8. Kühlvorrichtung nach einem der Ansprüche 5 bis 7, dadurch gekennzeichnet, daß das dritte Wirbelbett mit einer zweiten Abzugsleitung für Feststoffe ausgestattet ist.

9. Kühlvorrichtung nach einem der Ansprüche 5 bis 8, dadurch gekennzeichnet, daß das erste, zweite und dritte Wirbelbett in einem gemeinsamen Druckgehäuse angeordnet sind.

## Claims

1. A method for cooling hot solids coming from a fluidised bed reactor, which are conveyed from the reactor by hot gas to a separator, are separated from the gas in the separator and are passed into a cooling zone which contains at least one fluidised bed with a cooling device, the solids being passed back at least in part into the fluidised bed reactor from the cooling zone through a discharge line, characterised in that the solids are passed from the separator to a first fluidised bed, that the solids are selectively passed from the first fluidised bed, controlled by a control means, to an underlying second fluidised bed or to the discharge line, that the solids are guided downwards in the second fluidised bed and at the lower end of the second fluidised bed pass into the lower end of a third fluidised bed through a transition region, that the solids are guided upwards in the third fluidised bed and are at least partly withdrawn through the discharge line in the upper region of the third fluidised bed, that the second and/or the third fluidised bed has a cooling means and that fluidising gases are withdrawn from a collecting chamber below the first fluidised bed and above the second and third fluidised beds.

2. A method according to Claim 1, characterised in that the control means acts on the transition region between the second and third fluidised bed by at least one controllable gas stream.

3. A method according to Claim 1 or 2, characterised in that the supply of fluidising gas to the first fluidised bed is controlled independently of the fluidising gases of the second and third fluidised beds.

4. A method according to one of Claims 1 to 3, characterised in that the cooling device is operated at a pressure of 1 to 50 bar.

5. A cooling device for cooling hot solids, which come from a fluidised bed reactor, are passed from a separator to the cooling device and are passed back at least in part into the fluidised bed reactor from the cooling device via a discharge line, the cooling device having at least one fluidised bed with a cooling means, characterised in that a first fluidised bed is connected to the separator and is located thereunder, that the first fluidised bed has a solids outlet which is directed to a second fluidised bed which is located beneath the first fluidised bed, that a third fluidised bed is located next to the second fluidised bed, the second and/or the third fluidised bed being provided with a cooling means, that the second fluidised bed is connected to the third fluidised bed via a solids passage located in the lower region, that a gas collection chamber with the discharge line for solids and a gas discharge line is located beneath the first fluidised bed and above the second and third fluidised bed and that a control means selectively guides solids coming from the first fluidised bed to the second fluidised bed or to the discharge line.

6. A cooling device according to Claim 5, characterised in that the control means is designed as a controllable gas supply means directed into the solids passage in the lower region of the second and third fluidised bed.

7. A cooling device according to Claim 5 or 6, characterised in that the discharge line for solids and the gas discharge line are formed as a common discharge line.

8. A cooling device according to one of Claims 5 to 7, characterised in that the third fluidised bed is equipped with a second discharge line for solids.

9. A cooling device according to one of Claims 5 to 8, characterised in that the first, second and third fluidised bed are located in a common pressure housing.

## Revendications

1. Procédé de refroidissement de matières solides chaudes provenant d'un réacteur à lit fluidisé, qui sont transportées du réacteur à un séparateur par du gaz chaud, qui sont séparées du gaz dans le séparateur et qui sont envoyées à une zone de refroidissement comportant au moins un lit fluidisé ayant un dispositif de refroidissement, des matières solides étant retournées au moins en partie de la zone de refroidissement au réacteur à lit fluidisé par un conduit d'évacuation, caractérisé en ce qu'il consiste à envoyer les matières solides du séparateur à un premier lit fluidisé, à envoyer les matières solides du premier lit fluidisé de manière commandée par un dispositif de régulation au choix à un deuxième lit fluidisé sous-jacent ou au conduit d'évacuation, à faire passer les matières solides dans le deuxième lit fluidisé vers le bas et à les faire passer à l'extrémité inférieure du deuxième lit fluidisé par une zone de transition à l'extrémité inférieure d'un troisième lit fluidisé, à faire passer les matières solides vers le haut dans le troisième lit fluidisé et à les évacuer dans la partie supérieure du troisième lit fluidisé au moins partiellement par le conduit d'évacuation, le deuxième et/ou le troisième lit fluidisé comportant un dispositif de refroidissement et des gaz de tourbillonnement étant soutiré d'une chambre collectrice en-dessous du premier lit fluidisé et au-dessus du deuxième et du troisième lits fluidisés.

2. Procédé suivant la revendication 1, caractérisé en ce que le dispositif de régulation agit par au moins un courant gazeux réglable sur la zone de transition entre le deuxième et le troisième lits fluidisé.

3. Procédé suivant la revendication 1 ou 2, caractérisé en ce qu'il consiste à régler l'arrivée de gaz de fluidisation au premier lit fluidisé indépendamment des gaz de fluidisation du deuxième et du troisième lits fluidisés.

4. Procédé suivant l'une des revendications 1 à 3, caractérisé en ce qu'il consiste à faire fonctionner les dispositifs de refroidissement sous une pression de 1 à 50 bar.

5. Installation de refroidissement destinée à refroidir des matières solides chaudes qui proviennent d'un réacteur à lit fluidisé, qui sont envoyées d'un séparateur au dispositif de refroidissement et qui retournent, au moins en partie, du dispositif de refroidissement au réacteur à lit fluidisé par un conduit d'évacuation, l'installation de refroidissement comportant au moins un lit fluidisé ayant un dispositif de refroidissement, caractérisée en ce qu'un premier lit fluidisé communiquant avec le séparateur est prévu en-dessous de celui-ci, en ce que le premier lit fluidisé comporte une sortie pour les matières solides, qui est dirigée vers un deuxième lit fluidisé, lequel est disposé en-dessous du premier lit fluidisé, en ce qu'à côté du deuxième lit fluidisé se trouve un troisième lit fluidisé, le deuxième et/ou le troisièmes lits fluidisés étant munis d'un dispositif de refroidissement, en ce que le deuxième lit fluidisé communique avec le troisième lit fluidisé par un passage pour les matières solides prévu à la partie inférieure, en ce qu'en-dessous du premier lit fluidisé et au-dessus du deuxième et du troisième lit fluidisés, est prévue une chambre collectrice des gaz ayant le conduit d'évacuation des matières solides et un conduit d'évacuation des gaz, et en ce qu'un dispositif de régulation fait passer les matières solides provenant du premier lit fluidisé au choix au deuxième lit fluidisé ou au conduit d'évacuation.

6. Installation de refroidissement suivant la revendication 5, caractérisée en ce que le dispositif de régulation est constitué sous la forme d'une arrivée de gaz réglable dirigée dans le passage pour les matières solides à la partie inférieure du deuxième et du troisième lits fluidisés.

7. Installation de refroidissement suivant la revendication 5 ou 6, caractérisée en ce que le conduit d'évacuation des matières solides et le conduit d'évacuation des gaz sont constitués sous la forme d'un conduit d'évacuation commun.

8. Installation de refroidissement suivant l'une des revendications 5 à 7, caractérisée en ce que le troisième lit fluidisé est muni d'un deuxième conduit d'évacuation des matières solides.

9. Installation de refroidissement suivant l'une des revendications 5 à 8, caractérisée en ce que le premier, le deuxième et le troisième lits fluidisés sont disposés dans une enveloppe commune qui résiste à la pression.
